# EUROPÄISCHE PATENTANMELDUNG

(11) **EP 4 019 221 A1**
(43) Veröffentlichungstag der Anmeldung: **29.06.2022**
(21) Anmeldenummer: 21215128.6
(22) Anmeldetag: 16.12.2021
(51) Int. Cl.: B29C 33/52, B29C 33/76, B29C 70/54, B29C 33/40, B29C 33/50, B29C 43/10, B29C 43/36, B29C 43/42, B29C 70/48, B29D 99/00, B29C 33/54

(54) **FORMKERN ZUR HERSTELLUNG EINES BAUTEILS AUS FASERVERBUNDMATERIAL**

(30) Priorität: 23.12.2020 DE 102020134901
(71) Anmelder: Airbus Operations GmbH, 21129 Hamburg (DE)
(72) Erfinder: Schubert, Konstantin, 21129 Hamburg (DE); Sievers, Jochen, 21129 Hamburg (DE); Looks, Jan, 21129 Hamburg (DE); Seegel, Hauke, 21129 Hamburg (DE)
(74) Vertreter: Bird & Bird LLP

(57) **Zusammenfassung**

Dargestellt und beschrieben ist ein Formkern (5) zur Herstellung eines Bauteils (1) aus Faserverbundmaterial mit einer Kavität (3). Die Aufgabe, einen Formkern bereitzustellen, der einen besonders einfachen und effizienten Entformungsprozess ermöglicht, wird durch einen Formkern gelöst, der sich entlang einer Längsachse (31) erstreckt und der als Hybridkern ausgebildet ist und in einem Querschnitt senkrecht zur Längsachse (31) betrachtet einen ersten Kernabschnitt (13) und einen zweiten Kernsbschnitt (15) umfasst, wobei der erste Kernabschnitt (13) aus einem ersten Material mit hoher Steifigkeit und niedrigem Wärmeausdehnungskoeffizienten gebildet ist und wobei der zweite Kernabschnitt (15) aus einem von dem ersten Material abweichenden zweiten Material gebildet ist und eingerichtet ist, um unter vorbestimmten Voraussetzungen seine Form in vorbestimmter Weise derart zu verändert, dass ein Entfernen des Formkerns (5) aus einer Kavität (3) des ausgehärteten Bauteils (1) erleichtert wird.

## Beschreibung

Die vorliegende Erfindung betrifft einen Formkern zur Herstellung eines Bauteils aus Faserverbundmaterial mit einer Kavität, insbesondere einer hinterschnittenen Kavität. Das Bauteil kann beispielsweise ein mit Stützelementen verstärktes Schalenelement für eine Flugzeugstruktur sein und vorzugsweise in einem Harzinfusionsprozess wie beispielsweise einem Resin Transfer Moulding (RTM) -Prozess oder Resin Infusions (RI) -Prozess hergestellt werden. Weitere Aspekte der Erfindung betreffen eine Formvorrichtung mit einem solchen Formkern sowie ein Verfahren zur Herstellung eines Bauteils aus Faserverbundmaterial mit einer solchen Formvorrichtung.

Bekannte Formvorrichtungen umfassen üblicherweise ein Formteil und einen Formkern. Formkerne werden insbesondere dann benötigt, wenn das herzustellende Bauteil eine komplexe Form aufweist und insbesondere eine von dem Formteil nicht ausfüllbare Kavität aufweist, im Falle eines mit Stützelementen verstärkten Schalenelements beispielsweise zwischen Stützelement und Schalenelement oder zwischen zwei Flanschen eines Stützelements. Das Formteil, auch Form genannt, weist üblicherweise eine Formoberfläche auf, die vorgesehen ist, um zu dem herzustellenden Schalenelement gewandt zu sein bzw. mit diesem in Kontakt zu sein und die mindestens eine vorzugsweise längliche Vertiefung zur Aufnahme eines Stützelements des herzustellenden Schalenelements aufweist. Der Formkern kann ein oder mehrere Kernteile umfassen und ist ausgebildet, um in der Kavität des Bauteils und dabei vorzugsweise in der Vertiefung des Schalenelements angeordnet zu sein und das Stützelement an dem Schalenelement während des Herstellungsprozesses, insbesondere während des Aushärtens, zu stützen, wenn das Stützelement des herzustellenden Schalenelements in der Vertiefung angeordnet ist.

Bei komplex geformten Bauteilen stellt das Entformen des Bauteils nach dem Aushärten, insbesondere das Entfernen des Formkerns aus der Kavität, eine besondere Herausforderung dar, denn die Kavität weist oft einen Hinterschnitt auf. Ein solcher Hinterschnitt kann entweder von Anfang an in der Kavität vorgesehen gewesen sein oder nach dem Aushärten infolge von Restspannungen im Bauteil entstehen, einem sogenannten "Spring-in-Effekt", wodurch die Wand der Kavität, wie beispielsweise der Flansch eines Stützelements, auf den Formkern drückt und diesen in der Kavität hält. Durch den Hinterschnitt wird der Formkern also formschlüssig oder zumindest kraftschlüssig in der Kavität gehalten und kann zum Entformen nicht ohne Weitere aus dieser entnommen werden.

Verschiedene Ansätze zur Lösung dieses Problems sind aus dem Stand der Technik bekannt.

Ein Beispiel hierfür sind lösliche Kerne. Diese sind jedoch, unabhängig von Material und Lösungsmittel, aufgrund der begrenzten Stabilität der verwendeten Materialien in der Regel hinsichtlich der erreichbaren Größen eingeschränkt. So kann z.B. das Produkt "AQUACORE", ein qualifiziertes Kernmaterial, nicht als Kernkonzept für große, dünne Kerne verwendet werden, da die Gesamtgröße des Kernpakets und damit sein Eigengewicht in Verbindung mit geringen lokalen Dicken und der Notwendigkeit, trockenes Material über die Kerne zu drapieren, leicht zu einem Bruch der Kerne führen würde.

Ein weiteres Beispiel sind geschmolzene Kerne. Diese sind jedoch aus Umwelt- und Gesundheitsgründen ungünstig und können aufgrund von Temperaturbeschränkungen nicht für alle Verbundwerkstoffe verwendet werden.

Noch ein Beispiel sind Massivkerne aus Metall oder anderen steifen Materialien. Diese sind jedoch hinsichtlich der erreichbaren Hinterschneidungen begrenzt und erfordern komplexe Kernkombinationen, um komplexe Teile zu realisieren, wobei auch eine Korrektur bzw. Kompensation für die unterschiedlichen Wärmeausdehnungskoeffizienten zwischen Kern und Bauteil erforderlich ist. Zusätzlich führen Effekte wie das Einfedern ("Spring-in") von Winkeln aus Faserverbundmaterial oft dazu, dass Kerne weiter unterteilt werden müssen, um ein Verklemmen des Bauteils auf dem Kern bzw. des Kerns auf dem Bauteil, je nach Geometrie, zu vermeiden. Die Erfahrung hat gezeigt, dass diese komplexen Kernanordnungen in der Serienfertigung zahlreiche Probleme durch den Verschleiß der beteiligten Bauteile und insbesondere durch die damit verbundenen Entformungsarbeiten und die damit verbundenen Belastungen kleinerer Kernquerschnitte verursachen.

Flexible Kerne, z. B. aus Silikon, sowie Kerne, die unter Druck stehen (z. B. Omega-Schläuche) und Kerne, die eine Kombination aus einem Druckschlauch und einem löslichen Füllstoff oder einem vakuumierten Schlauch mit einem sandähnlichen Füllstoff sind, sind ebenfalls hinsichtlich ihrer Stabilität eingeschränkt, zumindest wenn sie groß sind und in einem Lay-up-Prozess verwendet werden.

Die üblichste Lösung, metallische Kerne, führt in Verbindung mit den verschiedenen Anforderungen, die erfüllt werden müssen, um die Entformbarkeit zu gewährleisten, zu einer großen Anzahl von relativ kleinen Kernen bzw. Kernteilen, die wiederum einen hohen Aufwand an Reinigung, Lagerung, Trennmittelauftrag usw. erfordern.

Daher ist es die Aufgabe der vorliegenden Erfindung, einen Formkern bereitzustellen, mit dem die zuvor beschriebenen Nachteile überwunden werden können und der insbesondere einen besonders einfachen und effizienten Entformungsprozess ermöglicht.

Diese Aufgabe wird gelöst durch einen Formkern mit den Merkmalen des Anspruchs 1. Insbesondere wird die Aufgabe gelöst durch einen Formkern zur Herstellung eines Bauteils aus Faserverbundmaterial, das eine Kavität aufweist, vorzugsweise eine hinterschnittene Kavität. Bei dem Bauteil handelt es sich vorzugsweise um ein mit Stützelementen verstärktes Schalenelement, wobei die Kavität beispielsweise zwischen dem Stützelement und dem Schalenelement oder zwischen zwei Flanschen eines Stützelements vorgesehen ist. Mit Kavität ist in diesem Zusammenhang ein teilweise offener Hohlraum wie eine Aussparung, Nut, Mulde oder ähnliches gemeint. Der Formkern erstreckt sich vorzugsweise länglich entlang einer Längsachse. Der Formkern ist ferner als Hybridkern ausgebildet und umfasst in einem Querschnitt senkrecht zur Längsachse betrachtet einen ersten Kernabschnitt und einen zweiten Kernabschnitt. Der erste Kernabschnitt und der zweite Kernabschnitt bzw. deren Grenze erstrecken sich vorzugsweise entlang der Längsachse, vorzugsweise von einem Ende bis zum gegenüberliegenden Ende des Formkerns. Der erste Kernabschnitt ist aus einem, vorzugsweise metallischen, ersten Material mit hoher Steifigkeit und niedrigem Wärmeausdehnungskoeffizienten, wie beispielsweise Aluminium, Stahl oder Invar, gebildet. Eine hohe Steifigkeit in diesem Sinne ist vorzugsweise eine Steifigkeit von mindestens 50 GPa und ein niedriger Wärmeausdehnungskoeffizient in diesem Sinne ist vorzugsweise ein Wärmeausdehnungskoeffizient von höchstens 5^{∗}10^-6 1/K im für die Faserverbundfertigung üblichen Temperaturbereich von bis zu 400 °C, weiter bevorzugt ein Wärmeausdehnungskoeffizient von höchstens 2^{∗}10^-6 1/K im Temperaturbereich zwischen 20 °C und 200 °C. Der zweite Kernabschnitt ist aus einem von dem ersten Material abweichenden, vorzugsweise nichtmetallischen, zweiten Material gebildet und eingerichtet, um unter vorbestimmten Voraussetzungen seine Form, einschließlich seinen Aggregatzustand, in vorbestimmter Weise derart zu verändert, dass ein Entfernen des Formkerns aus einer Kavität des ausgehärteten Bauteils erleichtert wird, insbesondere im Vergleich zu einem Entfernen des Formkerns ohne Formänderung des zweiten Kernabschnitts.

Die Erfindung deckt also all die oben beschriebenen Probleme ab und löst sie durch die Kombination klassischer, steifer Metallkerne, die die erforderliche Steifigkeit und Stabilität für die Vormontage und Handhabung des Kernpakets bieten, mit den Vorteilen anderer Kernkonzepte. Das steife, vorzugsweise metallische Skelett ermöglicht eine Fixierung des gesamten Kernpakets an einer der verwendeten Formen, falls gewünscht, während das Sekundärmaterial die erforderlichen Oberflächen zum Teil während der Aushärtung gewährleistet, aber eine einfache Entformung ermöglicht. Der Vorteil der Erfindung ist also eine einfachere Entformung, die es erlaubt, komplexere Formen industriell zu realisieren, kombiniert mit der Möglichkeit, die Kerne als Werkzeuge, z.B. beim Vorformen ("Preforming"), ohne Handhabungsprobleme zu verwenden.

In einer bevorzugten Ausführungsform ist der erste Kernabschnitt ausgebildet, um mit mindestens einer ersten Oberfläche des herzustellenden Bauteils in Kontakt zu sein, wenn der Formkern zum Aushärten des Bauteils in der Kavität angeordnet ist. Gleichzeitig ist der zweite Kernabschnitt ausgebildet, um mit mindestens einer von der ersten Oberfläche abweichenden zweiten Oberfläche des herzustellenden Bauteils in Kontakt zu sein, vorzugsweise mit zwei senkrecht oder quer zueinander liegenden zweiten Oberflächen. Vorzugsweise weist der erste Kernabschnitt eine wesentlich größere Dicke senkrecht zur Längsachse als der zweite Kernabschnitt auf. Auf diese Weise kann eine ausreichende Stützung des Bauteils durch den ersten Kernabschnitt erfolgen, während der zweite Kernabschnitt das Entformen ermöglicht bzw. entscheidend erleichtert.

In einer weiteren bevorzugten Ausführungsform sind der erste Kernabschnitt und der zweite Kernabschnitt fest miteinander verbunden, insbesondere aneinander befestigt. Dadurch ist der Formkern einteilig gebildet, so dass die Handhabung vereinfacht und die strukturelle Festigkeit verbessert ist.

Dabei ist es besonders bevorzugt, wenn der erste Kernabschnitt und der zweite Kernabschnitt miteinander verklebt sind, insbesondere entweder durchgehend verklebt oder nur an diskreten Orten verklebt. Dabei kann die Kontaktfläche von dem ersten Material aufgeraut sein, um die Haftung zu erhöhen. Das Verkleben ist eine besonders einfache und wirksame Form der Verbindung.

Zusätzlich oder alternativ ist es bevorzugt, wenn der erste Kernabschnitt und der zweite Kernabschnitt mittels vorzugsweise diskreter mechanischer Befestigungselemente, wie beispielsweise Schrauben, Bolzen, Stifte, Rastelemente oder andere Formschlusselemente, miteinander verbunden sind, die vorzugsweise einen Formschluss zwischen den beiden Kernabschnitten herstellen. Eine Verbindung mit solchen Befestigungselementen ist besonders geeignet, um bei Wärmeausdehnungsunterschieden zwischen dem ersten und zweiten Material eine Ausdehnung des zweiten Material nicht zu behindern.

In einer bevorzugten Ausführungsform ist das zweite Material löslich, insbesondere mithilfe eines Lösungsmittels. Beispiele für ein solches lösliches Material sind verschiedene Kunststoffe und Kunststoff-Sand-Gemische, wie beispielsweise SR-30 des Herstellers Stratasys, und Beispiele für ein entsprechendes Lösungsmittel sind abhängig von dem jeweiligen löslichen Material Wasser, leicht basische NaOH-Lösungen oder spezielle materialangepasste Chemikalien. Wenn das zweite Material löslich ist, kann der zweite Kernabschnitt in einfacher Weise aufgelöst, d.h. verflüssigt werden, wodurch sich die Form des zweiten Kernabschnitts ändern bzw. der zweite Kernabschnitt komplett entfernt werden kann, so dass der erste Kernabschnitt ausreichend von der Wand der Kavität des Bauteils beabstandet ist, um dieser einfach aus der Kavität entfernen zu können.

Dabei ist es besonders bevorzugt, wenn das zweite Material mit einem Lösungsmittel löslich ist, welches vorzugsweise nicht aggressiv in Bezug auf das Faserverbundmaterial des herzustellenden Bauteils ist. Beispiele für ein solches Lösungsmittel sind Wasser und stark wässrige Lösungen, wie etwa NaOH-Lösungen. Zusätzlich oder alternativ kann auch der zweiter Abschnitt des Formkerns gegenüber dem Bauteil bzw. das Bauteil gegenüber dem zweiter Abschnitt des Formkerns zum Schutz vor Lösungsmittel beim Lösen des zweiten Materials abgedichtet sein. In beiden Fällen wird das Material des Bauteils vor Schäden durch das Lösungsmittel geschützt.

Dabei ist es ferner bevorzugt, wenn der erste Kernabschnitt mehrere Abschnittsteile aufweist. Das zweite Material des zweiten Kernabschnitts kann dabei einen Spalt zwischen zwei Abschnittsteilen des ersten Kernabschnitts abdecken oder abdichten. Alternativ oder zusätzlich kann das zweite Material des zweiten Kernabschnitts ein Verbindungselement zum Verbinden zweier Abschnittsteile des ersten Kernabschnitts abdecken oder abdichten. Auf diese Weise erfüllt das zweite Material eine weitere Funktion neben dem Erleichtern des Entformens.

In einer weiteren bevorzugten Ausführungsform hat das zweite Material mindestens in Richtung quer zur Längsachse einen höheren, vorzugsweise wesentlich höheren, Wärmeausdehnungskoeffizienten als das erste Material, vorzugsweise mindestens viermal höher, weiter bevorzugt mindestens zehnmal höher, meist bevorzugt mindestens zwanzigmal höher. Insbesondere oder alternativ beträgt der Wärmeausdehnungskoeffizient des zweiten Materials mindestens 20^{∗}10^-6 1/K, vorzugsweise mindestens 50^{∗}10^-6 1/K, weiter bevorzugt mindestens 100^{∗}10^-6 1/K. Dies erleichtert das Entformen, da der zweite Kernabschnitt beim Abkühlen stark schrumpft und somit ein Spalt zwischen dem Formkern und der die Kavität umgebende Oberfläche des Bauteils entsteht, der einen Form- und Kraftschluss aufhebt. Gleichzeitig wird das Bauteil während des Aushärtens bei hoher Temperatur durch den ausgedehnten zweiten Kernabschnitt ausreichend gestützt.

Dabei ist es besonders bevorzugt, wenn das zweite Material Silikonkautschuk ist, vorzugsweise mit oder ohne Verstärkungen zur Erzeugung verschiedener effektiver Wärmeausdehnungskoeffizienten in unterschiedlichen Richtungen. Alternativ kann das zweite Material auch ein Hochtemperatur-Kunststoff sein, wie beispielsweise Polyetheretherketon (PEEK). Alternativ kann das zweite Material auch ein Stahlgerüst mit Aluminiumeinsätzen sein. Diese Materialien weisen alle einen hohen Temperaturausdehnungskoeffizienten auf. Zusätzliche Verstärkungen oder Einsätze können eingesetzt werden, um den Wärmeausdehnungskoeffizienten lokal oder richtungsabhängig an bestimmte Anforderungen anzupassend.

Dabei ist es ferner bevorzugt, wenn der zweite Kernabschnitt mehrere vorzugsweise separate Kernteile aufweist, die mit einem Spalt zwischen einander an dem ersten Kernabschnitt angeordnet oder befestigt sind. Der Spalt und das zweite Material sind dabei im Hinblick auf den Wärmeausdehnungskoeffizienten derart angepasst, dass bei Erwärmung des Formkerns auf eine Aushärtetemperatur des herzustellenden Bauteils der Spalt aufgrund der Wärmeausdehnung der Kernteile spannungsfrei oder mit einer vorbestimmten Druckspannung geschlossen wird. Eine solche vorbestimmte Druckspannung kann beispielsweise beabsichtigt sein, um durch den zweiten Kernabschnitt einen bestimmten Druck auf das Bauteil auszuüben. Andererseits kann bei entsprechender Anpassung auch gerade solch ein Druck vermieden werden, obgleich der Spalt dennoch geschlossen wird.

In einer bevorzugten Ausführungsform ist das zweite Material ein kompaktiertes Granulat, wie beispielsweise ein Pulver, Sand oder Ähnliches. Ein solches Granulat kann einerseits im kompaktierten Zustand eine starre Form annehmen und somit das Bauteil ausreichend stützen, andererseits kann es im nicht kompaktierten Zustand aber auch sehr leicht verformt werden, um das Entformen zu erleichtern.

Dabei ist es besonders bevorzugt, wenn das kompaktierte Granulat durch ein Granulat gebildet ist, welches in einer Hülle, vorzugsweise in einer flexiblen Hülle, wie beispielsweise einer Kunststoffhülle, eingeschlossen und vakuumiert ist, so dass es eine starre Form einnimmt. Zum Entformen kann diese starre Form durch Öffnen oder Einstechen der Hülle wieder aufgelöst werden, um den Formkern leicht entnehmen zu können. Dies stellt eine besonders einfache und effektive Möglichkeit dar, das Granulat zu kompaktieren.

Ein weiterer Aspekt der vorliegenden Erfindung betrifft eine Formvorrichtung zur Herstellung eines Bauteils aus Faserverbundmaterial mit einer Kavität. Die Formvorrichtung umfasst ein Formteil mit einer Formoberfläche zur Anlage an das herzustellende Bauteil sowie einen Formkern nach einer der zuvor beschriebenen Ausführungsformen. Die zuvor im Zusammenhang mit dem Formkern beschriebenen Merkmale und Wirkungen sind vis-a-vis auch im Zusammenhang mit der Formvorrichtung anwendbar und bevorzugt.

Noch ein weiterer Aspekt der vorliegenden Erfindung betrifft ein Verfahren zur Herstellung eines Bauteils aus Faserverbundmaterial mit einer Kavität, wobei das Verfahren die folgenden Schritte umfasst:
Es wird eine Formvorrichtung nach einer der zuvor beschriebenen Ausführungsformen bereitgestellt. Außerdem wird ein Vorformlings des herzustellenden Bauteils mit einer Kavität bereitgestellt, vorzugsweise aus Trockenfasern oder aus vorimpregnierten Fasern.

Der Formkern wird in der Kavität angeordnet, so dass die die Kavität umgebenden Oberflächen des Vorformlings durch den Formkern gestützt werden, wobei vorzugsweise der erste Kernabschnitt an mindestens einer ersten Oberfläche des Vorformlings anliegt und der zweite Kernabschnitt an mindestens einer zweiten Oberfläche des Vorformlings anliegt. Der Vorformling wird an der Formoberfläche des Formteils in Kontakt mit dieser angeordnet.

Danach wird das Bauteil, d.h. der Vorformling zu einem fertiggestellten Schalenelement, ausgehärtet. Dies geschieht vorzugsweise unter Druck- und Temperaturbehandlung, vorzugsweise entweder in einem geschlossenen Werkzeug, wobei die Formvorrichtung neben dem Formteil noch ein Gegenformteil umfasst, oder in einem offenen Werkezeug, welches nur das Formteil umfasst und zum Aushärten in einem Autoklav positioniert wird. Auch eine Aushärtung in einem Ofen unter Vakuum ist möglich und bevorzugt.

Anschließend wird das ausgehärtete Bauteil entformt, d.h. von dem Formteil gelöst und entfernt. Dabei oder danach wird der Formkern aus der Kavität gelöst, was durch eine Veränderung der Form des zweiten Kernabschnitts erleichtert wird. Diese Veränderung der Form des zweiten Kernabschnitts wird vorzugsweise entweder durch Lösen des zweiten Materials, vorzugsweise mit Lösungsmittel, oder durch Schrumpfen des zweiten Materials beim Abkühlen oder durch Auflösen der starren Form des kompaktierten Granulats, vorzugsweise durch Auflösen des Vakuums, beispielsweise durch Aufstecken der Hülle, herbeigeführt.

Die zuvor im Zusammenhang mit dem Formkern und der Formvorrichtung beschriebenen Merkmale und Wirkungen sind vis-a-vis auch im Zusammenhang mit dem vorliegenden Verfahren anwendbar und bevorzugt.

In einer bevorzugten Ausführungsform ist der Vorformling aus Trockenfasern gebildet, wobei nach dem Anordnen des Vorformlings zusammen mit dem Formkern an der Formoberfläche des Formteils und vor dem Aushärten der Vorformling mit Harz versehen, insbesondere durchtränkt wird. Dies geschieht vorzugsweise durch Harzinfusion oder - injektion, beispielsweise in einem sogenannten resin infusion (RI) oder resin transfer molding (RTM) Prozess. Dies stellt ein besonders einfaches und vorteilhaftes Verfahren bei Einsatz von duromerem Harz dar.

Im Folgenden werden Ausführungsbeispiele der Erfindung anhand einer Zeichnung näher erläutert. Die Zeichnung zeigt in
- Fig. 1: eine schematische Querschnittsansicht von herzustellenden Bauteilen, welche mit aus dem Stand der Technik bekannten Formkernen sowie mit einem Formkern gemäß der vorliegenden Erfindung gestützt werden,
- Fig. 2: eine perspektivische Ansicht eines herzustellenden Bauteils in Form eines mit Stützelementen verstärkten Schalenelements, wobei die Stützelemente mit erfindungsgemäßen Formkernen gestützt werden,
- Fig. 3: eine perspektivische Detailansicht des Querschnitts des Bauteils aus Fig. 2,
- Fig. 4: eine schematische Querschnittsansicht eines Formkern gemäß einer Ausführungsform der Erfindung in abgekühltem und erwärmtem Zustand und
- Fig. 5: eine schematische Querschnittsansicht einer Formvorrichtung mit darin angeordnetem Bauteil und Formkern gemäß einer Ausführungsform der Erfindung in abgekühltem und erwärmtem Zustand.

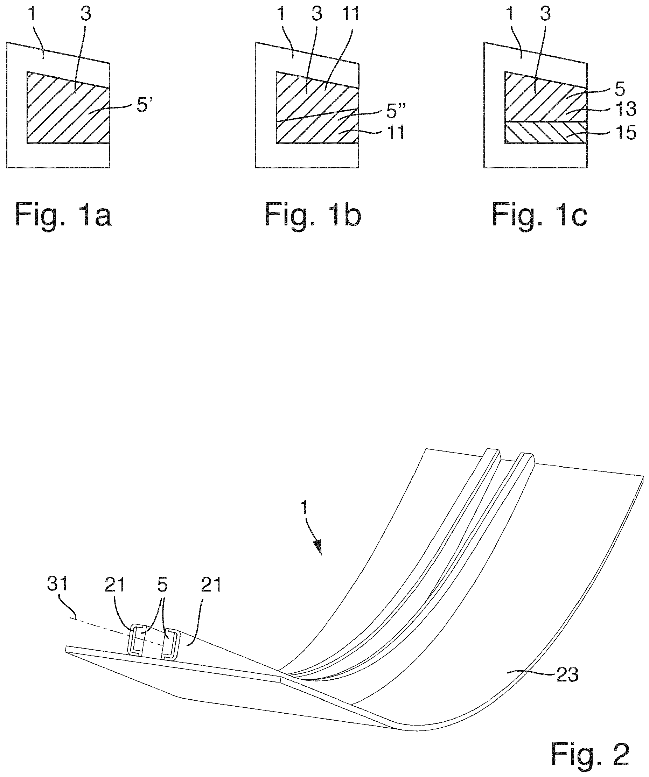

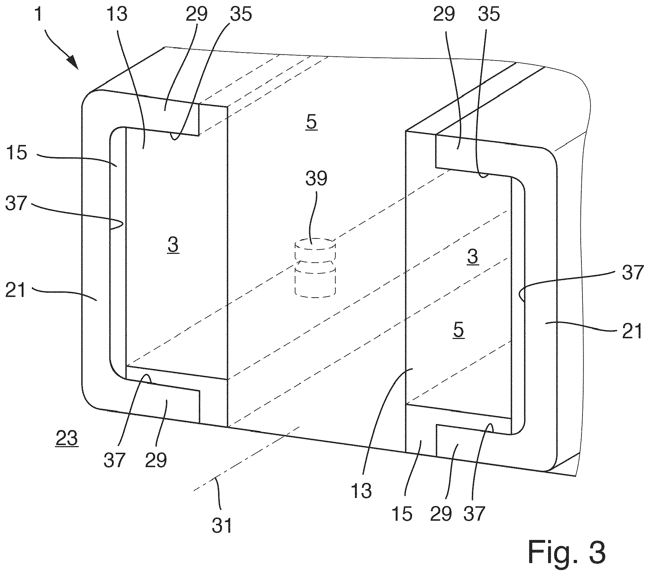

In Fig. 1 sind drei Abbildungen eines Bauteils 1 aus Faserverbundmaterial mit einer hinterschnittenen Kavität 3 dargestellt, wobei das Bauteil 1 zur Herstellung in einem RTM-Prozess in Fig. 1a) mit einem aus dem Stand der Technik bekannten homogenen massiven Formkern 5' gestützt wird, wobei das Bauteil 1 in Fig. 1b) mit einem aus dem Stand der Technik bekannten zweigeteilten Formkern 5" gestützt wird und wobei das Bauteil in Fig. 1c) mit einem erfindungsgemäßen als Hybridkern ausgebildeten Formkern 5 gestützt wird. Wie leicht zu erkennen ist, kann der massive Formkern 5' in Fig. 1a) aufgrund des Hinterschnittes der Kavität 3 nur sehr schwer entfernt werden. Daher wird im Stand der Technik häufig der in Fig. 1b) gezeigte zweigeteilte Formkern 5" verwendet, bei dem beide Hälften 11 einzeln entnommen werden können, der jedoch in Herstellung, Montage und Handhabung aufwändig sowie aufgrund eines hohen Verschleißes nachteilig ist. Der in Fig. 1c) dargestellte erfindungsgemäße als Hybridkern gebildete Formkern 5 mit einem ersten Kernabschnitt 13 aus einem ersten Material und einem zweiten Kernabschnitt 15 aus einem zweiten Material erleichtert das Entformen durch eine Formänderung des zweiten Kernabschnitts 15, wie nachfolgend im Zusammenhang mit Fig. 2 und 3 genauer beschrieben wird, und stellt daher eine besonders einfache und effiziente Alternative zu den bekannten Formkernen 5', 5" dar.

In Fig. 2 und 3 ist ein weiteres Bauteil 1 dargestellt, in dem vorliegenden Ausführungsbeispiel ein mit Stützelementen 21 versehenes Schalenelement 23 einer Flugzeugstruktur, welches in einem RTM-Prozess hergestellt wird. Die Stützelemente 21 sind als C-Profilträger gebildet und weisen zwischen den beiden Flanschen 29 jedes Stützelements 21 eine Kavität 3 auf, in welcher ein entsprechender Formkern 5 angeordnet ist. Der Formkern 5 erstreckt sich länglich entlang einer Längsachse 31. Der Formkern 5 ist ferner als Hybridkern ausgebildet und umfasst in einem Querschnitt senkrecht zur Längsachse 31 betrachtet einen ersten Kernabschnitt 13 und einen zweiten Kernabschnitt 15. Der erste Kernabschnitt 13 und der zweite Kernabschnitt 15 erstrecken sich entlang der Längsachse 31. Der erste Kernabschnitt 13 ist aus einem metallischen ersten Material mit hoher Steifigkeit und niedrigem Wärmeausdehnungskoeffizienten, im vorliegenden Ausführungsbeispiel Invar 36, gebildet. Dieses weist eine Steifigkeit von etwa 141 GPa und einen Wärmeausdehnungskoeffizientenvon 1^{∗}10^-6 1/K bis 4^{∗}10^-6 1/K im interessanten Temperaturbereich zwischen 20°C und 200°C auf. Der zweite Kernabschnitt 15 ist aus einem von dem ersten Material abweichenden nichtmetallischen zweiten Material gebildet und eingerichtet, um unter vorbestimmten Voraussetzungen seine Form, einschließlich seinen Aggregatzustand, in vorbestimmter Weise derart zu verändert, dass ein Entfernen des Formkerns 5 aus einer Kavität 3 des ausgehärteten Bauteils 1 erleichtert wird im Vergleich zu einem Entfernen des Formkerns 5 ohne Formänderung des zweiten Kernabschnitts 15.

Wie in Fig. 3 dargestellt, ist der erste Kernabschnitt 13 ausgebildet, um mit mindestens einer ersten Oberfläche 35 des herzustellenden Bauteils 1 in Kontakt zu sein, wenn der Formkern 5 zum Aushärten des Bauteils 1 in der Kavität 3 angeordnet ist. Gleichzeitig ist der zweite Kernabschnitt 15 ausgebildet, um mit mindestens einer von der ersten Oberfläche 35 abweichenden zweiten Oberfläche 37 des herzustellenden Bauteils 1 in Kontakt zu sein, insbesondere mit zwei senkrecht oder quer zueinander liegenden zweiten Oberflächen 37. Dabei weist der erste Kernabschnitt 13 eine wesentlich größere Dicke senkrecht zur Längsachse 31 als der zweite Kernabschnitt 15auf

Wie ebenfalls in Fig. 3 dargestellt, sind der erste Kernabschnitt 13 und der zweite Kernabschnitt 15 fest miteinander verbunden. Insbesondere sind der erste Kernabschnitt 13 und der zweite Kernabschnitt 15 miteinander verklebt und zusätzlich mittels diskreter mechanischer Befestigungselemente 39 in Form von Bolzen miteinander verbunden, die einen Formschluss zwischen den beiden Kernabschnitten 13, 15 herstellen.

In dem in Fig. 2 und 3 gezeigten Ausführungsbeispiel ist das zweite Material löslich, insbesondere ein löslicher Kunststoff, und zwar mithilfe eines Lösungsmittels, welches nicht aggressiv in Bezug auf das Faserverbundmaterial des herzustellenden Bauteils 1 ist, nämlich beispielsweise Wasser. Dadurch, dass das zweite Material löslich ist, kann der zweite Kernabschnitt 15 in einfacher Weise aufgelöst, d.h. verflüssigt werden, wodurch sich die Form des zweiten Kernabschnitts 15 ändern bzw. der zweite Kernabschnitt 15 komplett entfernt werden kann, so dass der erste Kernabschnitt 13 ausreichend von der Wand der Kavität 3 des Bauteils 1 beabstandet ist, um dieser einfach aus der Kavität 3 entfernen zu können.

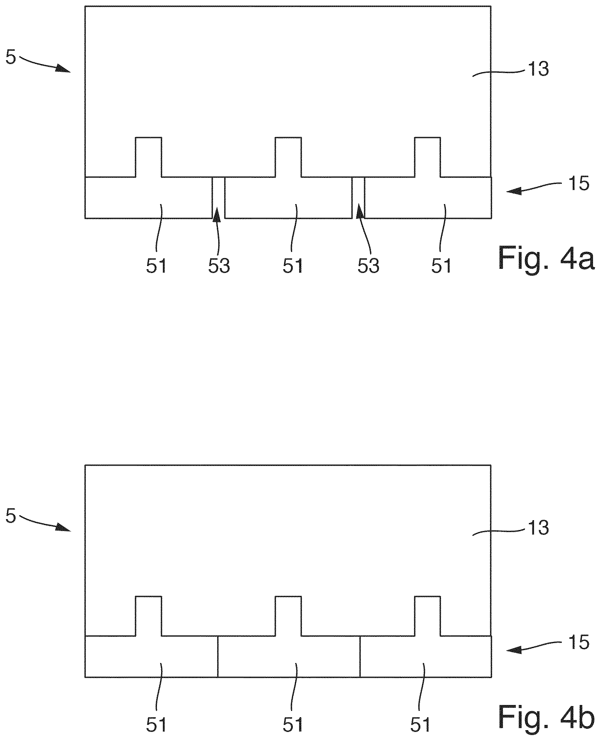

Alternativ zu dem zuvor beschriebenen löslichen zweiten Material kann das zweite Material mindestens in Richtung quer zur Längsachse 31 auch einen wesentlich höheren Wärmeausdehnungskoeffizienten als das erste Material aufweisen, wie dies in Fig. 4 dargestellt ist. In dem vorliegenden Ausführungsbeispiel aus Fig. 4 ist das zweite Material Silikonkautschuk mit Verstärkungen zur Erzeugung verschiedener effektiver Wärmeausdehnungskoeffizienten in unterschiedlichen Richtungen, so dass der Wärmeausdehnungskoeffizient des zweiten Material quer zur Längsachse 31 mindestens zwanzigmal höher ist als der Wärmeausdehnungskoeffizient des ersten Materials. Dies erleichtert das Entformen, da der zweite Kernabschnitt 15 beim Abkühlen stark schrumpft und somit ein Spalt zwischen dem Formkern 5 und der die Kavität 3 umgebende Oberfläche des Bauteils 1 entsteht, der einen Form- und Kraftschluss aufhebt. Gleichzeitig wird das Bauteil 1 während des Aushärtens bei hoher Temperatur durch den ausgedehnten zweiten Kernabschnitt 15 ausreichend gestützt.

Wie ebenfalls in Fig. 4 gezeigt, weist der zweite Kernabschnitt 15 mehrere separate Kernteile 51 auf, die mit einem Spalt 53 zwischen einander an dem ersten Kernabschnitt 13 angeordnet sind (Siehe Fig. 4a) in kaltem Zustand). Der Spalt 53 und das zweite Material sind dabei im Hinblick auf den Wärmeausdehnungskoeffizienten derart angepasst, dass bei Erwärmung des Formkerns 5 auf eine Aushärtetemperatur des herzustellenden Bauteils 1 der Spalt 53 aufgrund der Wärmeausdehnung der Kernteile 51 spannungsfrei oder mit einer vorbestimmten Druckspannung geschlossen wird (siehe Fig. 4b)). Eine solche vorbestimmte Druckspannung kann beispielsweise beabsichtigt sein, um durch den zweiten Kernabschnitt 15 einen bestimmten Druck auf das Bauteil 1 auszuüben. Andererseits kann bei entsprechender Anpassung auch gerade solch ein Druck vermieden werden, obgleich der Spalt 53 dennoch geschlossen wird.

Als dritte Alternative kann das zweite Material auch als ein kompaktiertes Granulat gebildet sein, wie beispielsweise ein Pulver, Sand oder Ähnliches. Ein solches Granulat kann einerseits im kompaktierten Zustand eine starre Form annehmen und somit das Bauteil 1 ausreichend stützen, andererseits kann es im nicht kompaktierten Zustand aber auch sehr leicht verformt werden, um das Entformen zu erleichtern. Das kompaktierte Granulat wird insbesondere dadurch kompaktiert, dass es in einer flexiblen Hülle eingeschlossen und vakuumiert wird, so dass es eine starre Form einnimmt. Zum Entformen kann diese starre Form durch Öffnen oder Einstechen der Hülle wieder aufgelöst werden, um den Formkern 5 leicht entnehmen zu können.

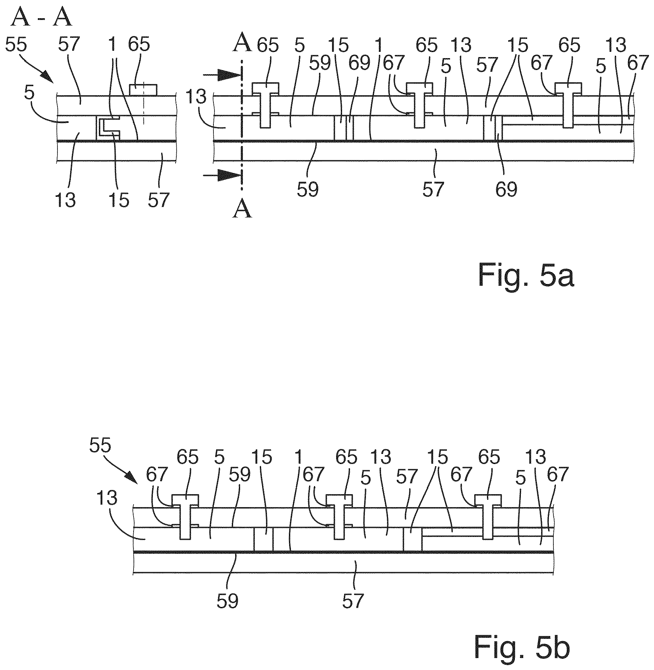

In Fig. 5 ist eine Formvorrichtung 55 zur Herstellung eines Bauteils 1 aus Faserverbundmaterial dargestellt. Die Formvorrichtung 55 umfasst ein Formteil 57 mit einer Formoberfläche 59 zur Anlage an das herzustellende Bauteil 1 sowie einen Formkern 5 mit einem zweiten Kernabschnitt 15 aus einem zweiten Material mit einem besonders hohen Temperaturausdehnungskoeffizienten im Vergleich zu dem ersten Material, wie weiter oben beschrieben. Insbesondere zeigt Fig. 5 eine beispielhafte Anwendung des Konzepts von unterschiedlichen Wärmeausdehnungskoeffizienten in Bauteil 1, Formteil 57 und Formkernen 5: Ein Formteil 57 mit niedrigem Wärmeausdehnungskoeffizienten enthält ein Bauteil 1 und Formkerne 5 mit einem zweiten Kernabschnitt 15 aus einem zweiten Material mit höherem Wärmeausdehnungskoeffizienten. Abhängig von der Geometrie können Formkerne 5 mit hohem Wärmeausdehnungskoeffizienten nicht gegen das äußere Formteil 57fixiert werden, um Spannungen beim Erwärmen zu vermeiden, aber mit dem beschriebenen Konzept können alle einzelnen Formkerne 5 an dem Formteil 57 befestigt werden, z. B. mit Schrauben 65 und entsprechender Dichtung 67 im kalten Zustand, wobei sich die Zwischenräume 69 durch das zweite Material des zweiten Kernabschnitts 15 mit hohem Wärmeausdehnungskoeffizienten füllen, wenn die Temperatur erhöht wird (Fig. 5b)). Der hohe Wärmeausdehnungskoeffizient kann parallel dazu auch als Dichtung 67 wirken, wie im rechten Teil von Fig. 5 dargestellt ist, und kann auch zur Erleichterung der Entformung gemäß den zuvor beschriebenen Mechanismen verwendet werden, wie beispielsweis in dem einen Querschnitt zeigenden Detail A-A ersichtlich ist.

Mit der zuvor beschriebenen Formvorrichtung 55 und dem zuvor beschriebenen Formteil 57 kann ein Bauteil 1 aus Faserverbundmaterial mit einer Kavität 3 in einem RTM-Prozess auf folgende Weise hergestellt werden:
Es wird eine Formvorrichtung 55 nach einer der zuvor beschriebenen Ausführungsformen bereitgestellt. Außerdem wird ein Vorformling aus Trockenfasern des herzustellenden Bauteils 1 mit einer Kavität 3 bereitgestellt.

Der Formkern 5 wird in der Kavität 3 angeordnet, so dass die die Kavität 3 umgebenden Abschnitte des Vorformlings durch den Formkern 5 gestützt werden, wobei der erste Kernabschnitt 13 an mindestens einer ersten Oberfläche 35 des Vorformlings anliegt und der zweite Kernabschnitt 15 an mindestens einer zweiten Oberfläche 37 des Vorformlings anliegt. Der Vorformling wird an der Formoberfläche 59 des Formteils 57 in Kontakt mit dieser angeordnet.

Danach wird das Bauteil 1, d.h. der Vorformling, zu einem fertiggestellten Bauteil 1, ausgehärtet. Dies geschieht unter Druck- und Temperaturbehandlung in einem geschlossenen Werkzeug, d.h. in einer geschlossenen Formvorrichtung 55, die neben dem Formteil 57 noch ein entsprechendes schließendes Gegenformteil umfasst.

Anschließend wird das ausgehärtete Bauteil 1 entformt, d.h. von dem Formteil 57 gelöst und entfernt. Dabei oder danach wird der Formkern 5 aus der Kavität 3 gelöst, was durch eine Veränderung der Form des zweiten Kernabschnitts 15 erleichtert wird. Diese Veränderung der Form des zweiten Kernabschnitts 15 wird, wie weiter oben beschrieben, entweder durch Lösen des zweiten Materials, vorzugsweise mit Lösungsmittel, oder durch Schrumpfen des zweiten Materials beim Abkühlen oder durch Auflösen der starren Form des kompaktierten Granulats durch Auflösen des Vakuums, beispielsweise durch Aufstecken der Hülle, herbeigeführt.

Mit der oben beschriebenen Erfindung kann also eine einfachere Entformung der Formkerne 5 erreicht werden, die es erlaubt, komplexere Formen industriell zu realisieren, kombiniert mit der Möglichkeit, die Formkerne 5 als Werkzeuge ohne Handhabungsprobleme zu verwenden.

## Patentansprüche

1. Formkern (5) zur Herstellung eines Bauteils (1) aus Faserverbundmaterial mit einer Kavität (3),
wobei sich der Formkern (5) entlang einer Längsachse (31) erstreckt,
wobei der Formkern (5) als Hybridkern ausgebildet ist und in einem Querschnitt senkrecht zur Längsachse (31) betrachtet einen ersten Kernabschnitt (13) und einen zweiten Kernsbschnitt (15) umfasst,
wobei der erste Kernabschnitt (13) aus einem ersten Material mit hoher Steifigkeit und niedrigem Wärmeausdehnungskoeffizienten gebildet ist und
wobei der zweite Kernabschnitt (15) aus einem von dem ersten Material abweichenden zweiten Material gebildet ist und eingerichtet ist, um unter vorbestimmten Voraussetzungen seine Form in vorbestimmter Weise derart zu verändert, dass ein Entfernen des Formkerns (5) aus einer Kavität (3) des ausgehärteten Bauteils (1) erleichtert wird.

2. Formkern (5) nach Anspruch 1, wobei der erste Kernabschnitt (13) ausgebildet ist, um mit mindestens einer ersten Oberfläche (35) des herzustellenden Bauteils (1) in Kontakt zu sein, und
wobei der zweite Kernabschnitt (15) ausgebildet ist, um mit mindestens einer zweiten Oberfläche (37) des herzustellenden Bauteils (1) in Kontakt zu sein.

3. Formkern (5) nach Anspruch 1 oder 2, wobei der erste Kernabschnitt (13) und der zweite Kernabschnitt (15) fest miteinander verbunden sind.

4. Formkern (5) nach Anspruch 3, wobei der erste Kernabschnitt (13) und der zweite Kernabschnitt (15) miteinander verklebt sind.

5. Formkern (5) nach Anspruch 3 oder 4, wobei der erste Kernabschnitt (13) und der zweite Kernabschnitt (15) mittels mechanischer Befestigungselemente (39) miteinander verbunden sind.

6. Formkern (5) nach einem der Ansprüche 1 bis 5, wobei das zweite Material löslich ist.

7. Formkern (5) nach Anspruch 6, wobei das zweite Material mit einem Lösungsmittel löslich ist, welches nicht aggressiv in Bezug auf das Faserverbundmaterial des herzustellenden Bauteils (1) ist.

8. Formkern (6) nach Anspruch 6 oder 7, wobei der erste Kernabschnitt (13) mehrere Abschnittsteile aufweist,
wobei das zweite Material des zweiten Kernabschnitts (15) einen Spalt zwischen zwei Abschnittsteilen des ersten Kernabschnitts (13) abdeckt oder abdichtet, und/oder
wobei das zweite Material des zweiten Kernabschnitts (15) ein Verbindungselement zum Verbinden zweier Abschnittsteile des ersten Kernabschnitts (13) abdeckt oder abdichtet.

9. Formkern (5) nach einem der Ansprüche 1 bis 5, wobei das zweite Material mindestens in Richtung quer zur Längsachse (31) einen höheren Wärmeausdehnungskoeffizienten als das erste Material hat, vorzugsweise mindestens viermal höher, weiter bevorzugt mindestens zehnmal höher, meist bevorzugt mindestens zwanzigmal höher.

10. Formkern (5) nach Anspruch 9, wobei das zweite Material Silikonkautschuk mit oder ohne Verstärkungen ist oder
wobei das zweite Material ein Hochtemperatur-Kunststoff ist oder
wobei das zweite Material ein Stahlgerüst mit Aluminiumeinsätzen ist.

11. Formkern (5) nach Anspruch 9 oder 10, wobei der zweite Kernabschnitt (15) mehrere Kernteile (51) aufweist, die mit einem Spalt (53) zwischen einander an dem ersten Kernabschnitt (13) angeordnet sind,
wobei der Spalt (53) und das zweite Material derart angepasst sind, dass bei Erwärmung des Formkerns (5) auf eine Aushärtetemperatur des herzustellenden Bauteils (1) der Spalt (53) aufgrund der Wärmeausdehnung der Kernteile (51) spannungsfrei oder mit einer vorbestimmten Druckspannung geschlossen wird.

12. Formkern (5) nach einem der Ansprüche 1 bis 5, wobei das zweite Material ein kompaktiertes Granulat ist.

13. Formkern (5) nach Anspruch 12, wobei das kompaktierte Granulat durch ein Granulat gebildet ist, welches in einer Hülle eingeschlossen und vakuumiert ist.

14. Formvorrichtung (55) zur Herstellung eines Bauteils (1) aus Faserverbundmaterial mit einer Kavität (3) umfassend
ein Formteil (57) mit einer Formoberfläche (59) zur Anlage an das herzustellende Bauteil (1) und
ein Formkern (5) nach einem der Ansprüche 1 bis 13.

15. Verfahren zur Herstellung eines Bauteils (1) aus Faserverbundmaterial mit einer Kavität (3), wobei das Verfahren die folgenden Schritte umfasst:
- Bereitstellen einer Formvorrichtung (55) nach Anspruch 14,
- Bereitstellen eines Vorformlings des herzustellenden Bauteils (1) umfassend eine Kavität (3),
- Anordnen des Formkerns (5) in der Kavität (3), so dass die die Kavität (3) umgebenden Oberflächen (35, 37) des Vorformlings durch den Formkern (5) gestützt werden,
- Anordnen des Vorformlings an der Formoberfläche (59) des Formteils (57),
- Aushärten des Bauteils (1),
- Lösen des Bauteils (1) von dem Formteil (57),
- Lösen des Formkerns (5) aus der Kavität (3) erleichtert oder ermöglicht durch Veränderung der Form des zweiten Kernabschnitts (15).
